# EUROPEAN PATENT APPLICATION

(11) **EP 2 644 557 A1**
(43) Date of publication of application: **02.10.2013**
(21) Application number: 12161262.6
(22) Date of filing: 26.03.2012
(51) Int. Cl.: B66C 23/30, B66C 23/20, B66C 23/18, F03D 1/00, F03D 11/04

(54) **Crane using support structure**

(71) Applicant: Siemens Aktiengesellschaft, 80333 München (DE)
(72) Inventor: Laurberg, Hans, 8000 Århus C (DK)

(57) **Abstract**

An arrangement (1) for mounting a tower (2) is provided. The arrangement (1) includes at least three pillars (3-1, 3-2, 3-3, 3-4), a first crane (4) and a plurality of bars (5). Each pillar (3-1, 3-2, 3-3, 3-4) is extensible along a central axis of the pillar (3-1, 3-2, 3-3, 3-4). The first crane (4) is attached to or attachable to an end of one of the pillars (3-1, 3-2, 3-3, 3-4). The bars (5) are adapted to connect one of the pillars (3-1, 3-2, 3-3, 3-4) to a neighbouring one of the pillars (3-1, 3-2, 3-3, 3-4) in a first direction crossing the central axes of the one pillar (3-1, 3-2, 3-3, 3-4) and of the neighbouring one of the pillars (3-1, 3-2, 3-3, 3-4).

## Description

### Crane using Support Structure

The invention relates to an arrangement for mounting a tower or a wind turbine.

In the field of wind power plants there is a trend towards wind turbines with always growing nominal power output. This entails growing rotor diameters and tower heights. The price and size of cranes used for the mounting of wind turbines increases dramatically with the height of wind turbine towers. Today's cranes are enormous and require hundreds of tons of ballast. Due to their size and weight such cranes need to be transported in several pieces and to be assembled at the site of the projected turbine. Transportation and assembly of such cranes take a long time. For these reasons mounting wind turbines entails a high cost for the cranes and the operation of the cranes.

An alternative to the common stand-alone cranes is presented in JP 2008-94628 which proposes a telescopic crane that attaches to the tower while the tower is being mounted. This results in a crane of lower weight because the tower supports the crane such that the crane itself requires less stability.

In view of the aforegoing, the invention provides an arrangement for mounting a tower. The arrangement includes at least three pillars, a first crane and a plurality of bars.

Each pillar is extensible along a central axis of the pillar. The first crane is attached to or attachable to an end of one of the pillars. The bars are adapted to connect one of the pillars to a neighbouring one of the pillars in a first direction crossing the central axes of the one pillar and of the neighbouring one of the pillars.

The arrangement of the invention has an advantage over the prior art in that each of the pillars can be much lighter than the cranes of the prior art. Thus, the arrangement can be transported more easily.

During the construction of the tower or wind turbine the at least three pillars can be arranged around the tower to be mounted. The bars are used to connect the pillars to each other in a way surrounding the tower to be mounted. In this way the arrangement is supported by the partially mounted tower. However, contrary to the solution of the prior art, the tower increases the stability of the arrangement in any direction away from the tower while the crane of the prior art is only supported by the tower along a direction of force that coincides with the line connecting crane and tower. For this reason the crane of the inventive arrangement can operate in any direction owing to the support from the partially mounted tower located at the centre of the arrangement during construction.

Furthermore no secondary crane is required for mounting the crane or arrangement as is the case in some prior art cranes. The arrangement of the invention can be assembled quickly because a large portion of the setup of the arrangement can be done automatically which shortens the time required for setting up the arrangement. In addition the lattice structure of the arrangement allows for reducing the weight of the arrangement even further. Since the arrangement is modular as a whole, it can be transported more easily than known cranes that need to be disassembled for transport.

The arrangement preferably further comprises a plurality of spacers. The spacers are connectable to a body section of a corresponding one of the pillars or to a corresponding one of the bars. Furthermore the spacers are adapted to extend in a second direction crossing the central axis of the corresponding one of the pillars and crossing the first direction.

It is to be understood that the second directions of each spacer can be different from that of other spacers. Preferably the second directions of the spacers cross within the centre of the arrangement, i.e. where the partially mounted tower is located during mounting of the tower. The spacers provide for a way of attaching the arrangement to the tower with a variable distance which is especially useful for towers that are shaped like a truncated cone or the like. The spacers can attach to either the pillars or the bars or to both the pillars and the bars.

The spacers are preferably further adapted to exert an expansion force along the second direction. The expansion force stabilises the arrangement by pressing against the tower located at the centre of the arrangement during mounting of the tower. In this way the arrangement can be attached securely to the tower without the need of providing matching parts on the tower for the spacers to anchor to.

The spacers may comprise a hydraulic or pneumatic cylinder. The spacers may also comprise a screw press device.

Each of the pillars may comprise a plurality of segments. The segments may be used for extending the pillars while the tower is being mounted. For example, each time a new segment of the tower is mounted on top of the partially completed tower, the pillars may be extended by one more segment. In particular at least one of the pillars or all pillars may comprise telescopic cylinders. Telescopic cylinders as for example hydraulic or pneumatic cylinders have an advantage in that they can be extended easily and in very little time. However, they have a disadvantage in that there maximum length/height is limited by the diameter of the main tube of the telescopic cylinder because due to the nested design of telescopic cylinders all other tubes have to fit inside their respective precursor tube. Thus, as an alternative segments of at least roughly the same diameter may be used. In this case the maximum height of the pillar is only limited by the number of segments that can be mounted on top of each other. However, in this case more time is required for extending the pillars and an additional crane may be required for mounting the additional segments of the pillars.

The arrangement may include for each segment of the pillars a corresponding spacer. By means of the spacers each segment can be attached to the tower.

Furthermore, the arrangement may include for each segment of the pillars a corresponding bar. The bars allow for setting a fixed distance between the corresponding segments of neighbouring pillars. Furthermore, they may deduce forces acting on one segment of a pillar to the corresponding segments of the neighbouring pillars. Hence, it is advantageous if for each segment of the pillars there is a corresponding bar. Especially embodiments including one spacer and one bar per segment of the pillars provide a very good stability. This is even more the case if the spacers are adapted to exert an expansion force along the second direction as set out above.

The arrangement preferably further comprises a plurality of braces adapted to connect one of the pillars to a neighbouring one of the pillars in a third direction crossing the first direction and the central axes of the one pillar and of the neighbouring one of the pillars. Such braces further increase the stability of the resulting lattice structure and allow for an even lighter.

The arrangement may further comprise a second crane attached to or attachable to an end of one of the pillars. The second crane may be used for mounting the rotor blades of a wind turbine where it is useful to lift the rotor blades at two different places of the rotor blade in order to be able to control the orientation of the rotor blade. Furthermore, the second crane can be used when using pillars comprising segments of constant diameters. Then, the second crane can be used in cooperation with the first crane for lifting additional segments to the top ends of the pillars. One of the first and second cranes can also be used for lifting the other crane to the top end of a pillar that has just been extended. In this way the pillars can be extended just using the cranes attached to or attachable to the pillars and additional pillar segments.

The pillars may be flexible along the second direction. This is especially useful for mounting towers that have a varying diameter along their vertical axis, for example towers having the shape of a truncated cone. The flexibility allows for maintaining a substantially constant distance between the pillars and the tower.

According to the invention, the inventive arrangement may be used for mounting a tower or a wind turbine.

These and other features, aspects and advantages of the invention will become better understood with reference to the following description and drawings. Throughout the drawings the same reference numerals will be used for identical or functionally equivalent items. Redundant description may be omitted for the sake of conciseness.

The invention will now be described in more detail, by way of example only, with reference to the accompanying drawings in which:
Fig. 1 shows an arrangement of the invention used for mounting a tower of a wind turbine;
Fig. 2 shows a cross-section through a first embodiment of the invention;
Fig. 3 shows a cross-section through a second embodiment of the invention;
Fig. 4 shows a cross-section through a third embodiment of the invention;
Fig. 5 shows a section of a fourth embodiment of the invention.

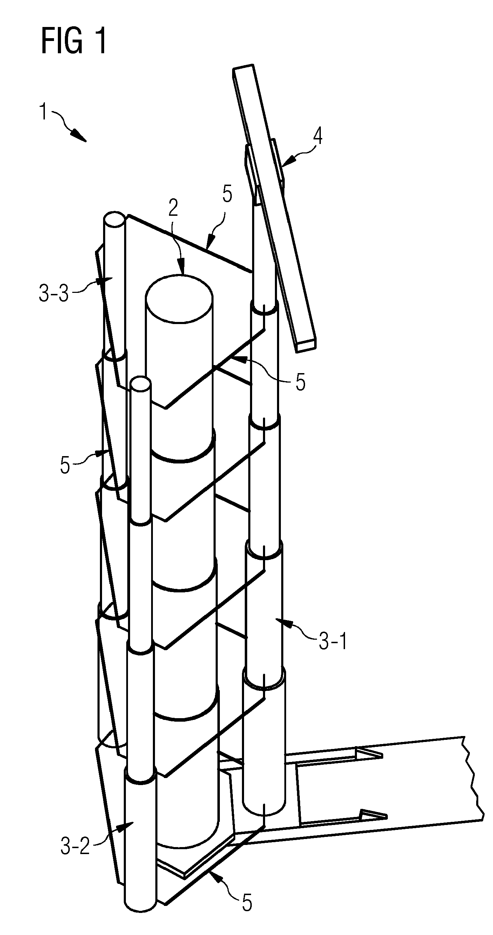

Fig. 1 shows an arrangement 1 of the invention used for mounting a tower 2 of a wind turbine. The arrangement of Fig. 1 includes three pillars 3-1, 3-2, 3-3 which are arranged around the partially completed tower 2. The pillars substantially form an equilateral polygon, in the present case an equilateral triangle. The pillars are connected to each other by means of a plurality of bars 5. In the example of Fig. 1 the bars are oriented in a substantially horizontal direction while the pillars are oriented in a substantially vertical direction. One of the pillars carries a crane 4 used for lifting additional tower segments to the top of the partially completed tower. Each time a new segment has been added to the partially completed tower 2, the pillars may be extended. In order to stabilise the extended pillars, new bars may be added. The crane may be used for lifting these additional bars.

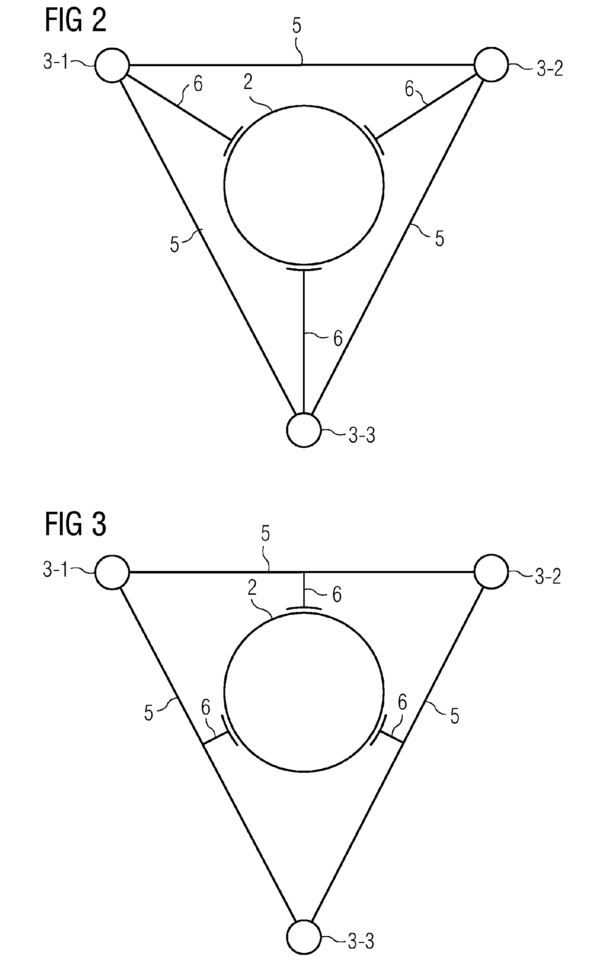

Fig. 2 shows a cross-section through a first embodiment of the invention. In the embodiment of Fig. 2 spacers 6 are provided which extend from the pillars 3-1, 3-2, 3-3 towards the tower 2. The arrangement of this embodiment of the invention uses spacers 6 to attach to the partially completed tower 2 in order to benefit from the stability of the tower. By using at least three pillars and three spacers, the arrangement becomes robust against forces from arbitrary directions. For this reason the pillars can be exceptionally light and thus transported with ease.

Fig. 3 shows a cross-section through a second embodiment of the invention. Contrary to the embodiment of Fig. 2 the spacers 6 of this embodiment attach to the bars 5 connecting the pillars 3-1, 3-2, 3-3 to each other. It would also be possible to provide spacers attached to both the pillars and the bars for added security.

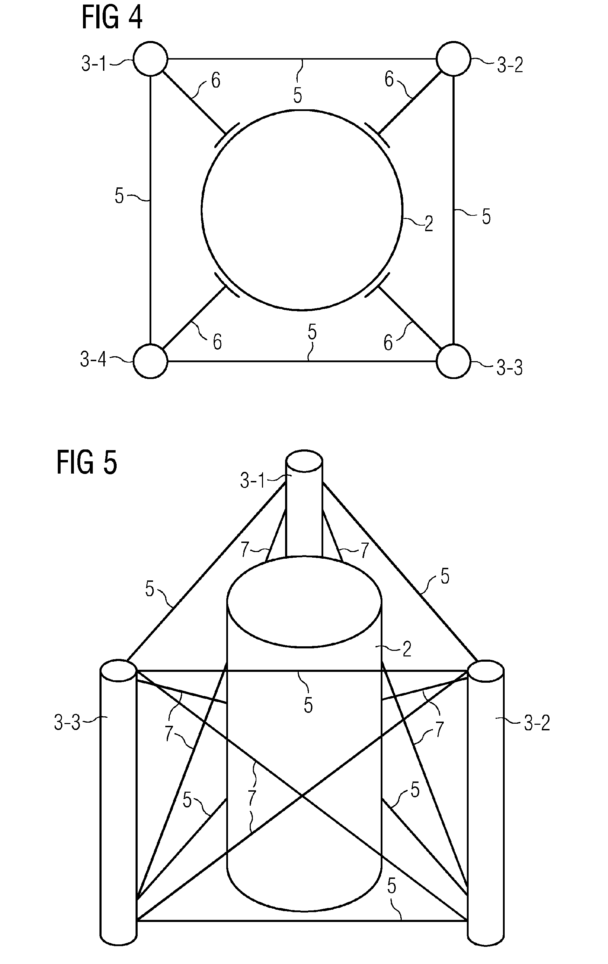

Fig. 4 shows a cross-section through a third embodiment of the invention. In the third embodiment four pillars 3-1, 3-2, 3-3 and 3-4 are provided. While more than three pillars are not necessary, additional pillars can provide for even better robustness. Furthermore, if towers of a very large diameter are to be constructed, the distance between the pillars can become very large if a low number of pillars is used. In such cases four or more pillars can be used. Arranging the four or more pillars in the form of an equilateral polygon will yield minimum distances between the pillars and the bars on the one hand and the tower on the other.

Fig. 5 shows a section of a fourth embodiment of the invention. Only a single segment of the pillars is shown. As before, the pillars are connected to each other by means of bars 5. In addition braces 7 are provided which result in a framework structure. The braces improve stability of the arrangement even further such that the pillars can be realised with a smaller diameter and hence a much lower weight. In fact, the total weight of such an embodiment including braces can be lower than that of one without braces while providing the same stability. However, the braces can make the set-up of the arrangement more complex and more time-consuming.

The arrangement of the invention may be transported in four parts each of which may be transported by a single trailer. One trailer will carry the crane together with the corresponding pillar, a second and a third trailer will each carry another pillar together with a corresponding part of the bars and optionally braces. A fourth trailer may be used for transporting ballast for securing the pillars during mounting of the tower or wind turbine. For long distance transport it may be possible to disassemble the crane and corresponding pillar. In such a case the crane may be transported in one trailer, three trailers may be used for the pillars and another trailer may be used for bars and optionally braces.

At the site of the tower to be erected the three trailers with the pillars may be parked next to the site. The pillars will be put into a vertical position, for example by using hydraulics. Once the pillar carrying the crane is erected, the crane will be unfolded. The crane can be used to help in setting up the remaining parts of the arrangement. Once the pillars are set, the bars are added to secure the pillars. The lowest part of the pillars attaches to the tower by means of the spacers. If any ballast is required, this is added to the back of the crane pillar. The trailers can be removed once the pillars have been set up.

While the invention has been described by referring to preferred embodiments and illustrations thereof, it is to be understood that the invention is not limited to the specific form of the embodiments shown and described herein, and that many changes and modifications may be made thereto within the scope of the appended claims by one of ordinary skill in the art.

## Claims

1. An arrangement (1) for mounting a tower (2) and including at least three pillars (3-1, 3-2, 3-3, 3-4) each of which being extensible along a central axis of the pillar (3-1, 3-2, 3-3, 3-4), a first crane (4) attached to or attachable to an end of one of the pillars (3-1, 3-2, 3-3, 3-4) and a plurality of bars (5) adapted to connect one of the pillars (3-1, 3-2, 3-3, 3-4) to a neighbouring one of the pillars (3-1, 3-2, 3-3, 3-4) in a first direction crossing the central axes of the one pillar (3-1, 3-2, 3-3, 3-4) and of the neighbouring one of the pillars (3-1, 3-2, 3-3, 3-4).

2. The arrangement (1) of claim 1, further comprising a plurality of spacers (6) connectable to a body section of a corresponding one of the pillars (3-1, 3-2, 3-3, 3-4) or to a corresponding one of the bars (5) and adapted to extend in a second direction crossing the central axis of the corresponding one of the pillars (3-1, 3-2, 3-3, 3-4) and crossing the first direction.

3. The arrangement (1) of claim 2, wherein the spacers (6) are further adapted to exert an expansion force along the second direction.

4. The arrangement (1) of claim 3, wherein the spacers (6) comprise a hydraulic or pneumatic cylinder or wherein the spacers (6) comprise a screw press device.

5. The arrangement (1) of one of the preceding claims, wherein each of the at least three pillars (3-1, 3-2, 3-3, 3-4) comprises a plurality of segments.

6. The arrangement (1) of claim 5, wherein at least one of the pillars (3-1, 3-2, 3-3, 3-4) comprises a telescopic cylinder.

7. The arrangement (1) of one of the claims 5 or 6 as dependent on one of the claims 2 through 4, wherein the arrangement (1) includes for each segment of the pillars (3-1, 3-2, 3-3, 3-4) a corresponding spacer (6).

8. The arrangement (1) of one of the claims 5 through 7, wherein the arrangement (1) includes for each segment of the pillars (3-1, 3-2, 3-3, 3-4) a corresponding bar (5).

9. The arrangement (1) of one of the preceding claims, further comprising a plurality of braces (7) adapted to connect one of the pillars (3-1, 3-2, 3-3, 3-4) to a neighbouring one of the pillars (3-1, 3-2, 3-3, 3-4) in a third direction crossing the first direction and the central axes of the one pillar (3-1, 3-2, 3-3, 3-4) and of the neighbouring one of the pillars (3-1, 3-2, 3-3, 3-4).

10. The arrangement (1) of one of the preceding claims, further comprising a second crane attached to or attachable to an end of one of the pillars (3-1, 3-2, 3-3, 3-4).

11. The arrangement (1) of claim 2 or of one of the preceding claims as dependent on claim 2, wherein the pillars (3-1, 3-2, 3-3, 3-4) are flexible along the second direction.

12. Use of an arrangement (1) of one of the preceding claims for mounting a tower (2) or a wind turbine.
